# EUROPEAN PATENT SPECIFICATION

(11) **EP 0 735 825 B1**
(45) Date of publication and mention of the grant of the patent: **20.02.2002**
(21) Application number: 95904736.6
(22) Date of filing: 14.12.1994
(51) Int. Cl.: A23C 19/05, A23C 19/024

(54) **METHOD OF MILK PRE-TREATMENT FOR CHEESE AND QUARG PRODUCTION**
VERFAHREN ZUR VORBEHANDLUNG VON MILCH ZUR KÄSE- UND QUARKHERSTELLUNG
PROCEDE DE PRETRAITEMENT DU LAIT DANS LE BUT DE PREPARER DU FROMAGE ET DU QUARG

(30) Priority: 14.12.1993 SK 1402093
(43) Date of publication of application: 09.10.1996
(73) Proprietor: ZEMPMILK A.S., 071 01 Michalovce (SK)
(72) Inventor: SALUS, Milos, 040 00 Kosice (SK); SUBAK, Ján, 071 01 Michalovce (SK); PETRANIN, Gabriel, 071 01 Michalovce (SK)
(74) Representative: Goy, Wolfgang, Dipl.-Phys.
(86) International application number: SK9400004
(87) International publication number: WO9516357

(56) References cited:
- WO-A-92/03059
- FR-A- 1 522 455
- US-A- 4 534 982
- A. JANA ET AL.: 'Process standardization for manufacture of mozarella cheese from homogenized buffalo milk' INDIAN JOURNAL OF DAIRY SCIENCE vol. 45, no. 5, 1992, pages 256 - 260
- DATABASE FSTA INTERNATIONAL FOOD INFORMATION SERVICE (IFIS), FRANKFURT/MAIN, DE 76-09-P1776, 1976 SMIETANA Z. ET AL.: 'Technology and characteristics of jezioranski and serwit cheeses' & PRZEGLAD MLECZARSKI, vol.25, no.3 pages 22 - 24
- MILCHWISSENSCHAFT., vol.47, no.4, 1992, MUNCHEN DE pages 225 - 227 J. KOROLCZUK ET AL. 'Effect of homogenisation of milk on the consistency of UF fresh cheese'
- AUSTRALIAN JOURNAL OF DAIRY TECHNOLOGY., vol.47, no.1, 1992, PARKVILLE AU pages 72 - 79 A. JANA ET AL. 'Homogenisation of milk for cheesemaking- a review'
- J. DAVIS 'CHEESE VOL. 1' 1965 , J&A CHURCHILL , LONDON see page 150 - page 151

## Description

### Area of technique

The invention deals with a method of milk pre-treatment for cheese and quarg classical production, resulting in an increase of the proteins and fats yield from the milk.

### The present state of the art

According to the process by which casein is precipitated from a milk, methods of milk processing for curd, cheese and casein production can be divided into two groups: (1) where a casein is precipitated from the milk by acidifying to its izoelectric point of pH 4.5, or (2) by enzymes, for example, by rennet. The milk proteins are composed of c. 80 mass % of casein and 20 mass % of other proteins, which are identified as the whey proteins. Both mentioned methods of the casein precipitation cannot avoid the loss of biologically valuable proteins in wastes. To increase the yield of proteins from the treated cheese milk, one must focus on a better use of the whey proteins.

Modern methods of milk pre-treatment, that have so far been used to increase of the proteins and fats yield can be divided into a few groups. In the first group, there are methods based on ultra-filtration, dia-filtration and dehydration. At these procedures, the milk is concentrated in ultra-filtration equipment (CS AO 242 219; AO 255 311), or the method of ultra-filtration and dehydration is employed in combination, and the obtained concentrate is then dia-filtrated (DD P 247 832, P 255 472, P 257 577 or DE P 2,035 534, P 2, 064 974, US P 4,449 231).

In the second group, there are methods directed at increasing the protein yield from whey by ultra-filtration, precipitation at an elevated temperature, or by the electric way. By heating at an elevated temperature of above 85 °C, the milk proteins are precipitated from the whey (CS AO 170 385), or the whey is subjected to heat treatment, while calcium salts are added, and then the whey is subjected to the influence of the ion-exchanger at a normal temperature (PL P 129 343). Another method, which has also been used, adds a concentrate obtained from the whey by ultra-filtration or electrolysis (SU AO 1 220 608) to enrich the milk prior to processing.

Another group is represented by methods that utilise the homogenisation of milk at high pressures over 12 MPa, which is carried out before cheesemaking. During the homogenisation process casein micelles are partially crumbled which results in the release of carboxyl groups of amino acids that bind free calcium bringing about a higher curdleability of milk (PL P 93 876). The patent (DD P 257 577) is based on a similar principle according to which milk is flowing turbulently through a heater at temperature of 85- 95 °C under the pressure of 100 - 200 kPa.

The simplest and most efficient way of milk pre-treatment is a group of procedures based on the fact that when milk is curdling, ionizable calcium is bound to casein, in which kappa-casein is hydrolysed by proteolytic enzymes. In raw milk, the content of ionizable calcium is sufficient, however, the balance of mineral salts is broken by pasteurisation of the milk. The content of calcium may decrease due to the physiological condition of cows. Therefore, to increase the yield of proteins, the content of calcium in the milk is modified by the addition (single dose) of calcium salts, what results in a higher curdleability of the milk (CS AO 178 691, PL P 86 491, P 88 360, P 118 079).

At present known milk pre-treatment according the classical method of cheese production are based on the facts that milk, which can be pasteurised and to which calcium chloride can be added, is homogenised at a pressure of 40 to 50 kg/cm² and a temperature of 50 to 80 °C, thereafter lactic acid ferment and rennet are added and the milk is coagulated. A modification of this pre-treatment process of classical method of cheese production FR 1522455) is focused to application of coagulation during the whirling (turbulent) circulation.

In another case there is known the method of preparation of artificial or imitated cream cheese by mixing of the protein (non-fat milk solid), fat or oil (vegetable) and a emulsifier. The cream mix is heated at a temperature of 65 to 70 °C, pasteurised at 80 to 90 °C and the homogenised at a pressure 50 to 200 kg/cm², very quickly cooled and after a lactic acid ferment starter, rennet and calcium chloride are added to the cream mix and transformed to a cheese product (USA 4534982).

Similar one is also a method of a preparation of Mozzarella cheese from buffalo milk (Indian Journal of Dairy science, Vol. 45, ps. 256-260, 1992), where cheese milk is pasteurised at 72 °C and homogenised using 25 and 50 kg/cm² and after at a temperature of 60 °C are added starter, calcium chloride and rennet and transformed into Mozzarella cheese.

The preparation of Jezoriansky Serwit cheese from pasteurised milk with a high fat and protein retention has been disclosed (Przeglad Mleczarski Vol. 25, No. 3, pp. 22-24- in FSTA abstract 76-09-P1776), where a calcium chloride was added after pasteurisation at a high temperature of 92 °C, but without suggestion any kind of milk homogenisation, and then lactic acid ferment starter and second dose of Ca salts was added before renneting. High yielding of protein was in this case explained as a consequence of pasteurisation at a higher temperature, over 90°C.

A disadvantage of the above-mentioned procedures of milk pre-treatment for cheese and quarg production is the demanding of a special technological equipment (ultra-filtration, dia-filtration and electrolysis) or the energy consumption due to necessity of the additional heating of the milk up to higher temperatures above 85 °C, or due to the higher pressure above 200 kPa. At the other procedures, there is necessary to add thermally destabilising compounds, ion-exchangers.

Considering the disadvantages, the milk pre-treatment based on the modification of the calcium ratio seems to be the simplest and the most effective, comparing to the means used. A disadvantage of the single treatment of milk by adding a defined (standardised) amount of calcium salts prior to pasteurisation may be a possible worsening of the consistency of the rennet curd. Therefore, after heating the milk, it is necessary to regulate the concentration of insoluble calcium salts by binding calcium into complex compounds, or by substituting calcium cations for sodium cations.

By the solution according to the presented invention the substantial operations of cow milk pre-treatment has been changed to minimalist of milk fat loss in whey (which is separated from quarg in a process of cheesemaking) and to decrease the protein content in the whey.

### The principle of the invention

The mentioned deficiencies can be removed to a large extent by using the method of milk pre-treatment in the production of cheese and quarg according to the invention.

The essence of it lies in a physico- chemical disaggregation of milk fat, casein mice le complexes and in the partial disaggregation of soluble protein micelle complexes at a temperature of 55 - 74°C under a pressure of 4 - 8 MPa in a homogeniser while a defined (standardised) amount of calcium salts is being gradually added the calcium content is repeatedly conditioned by the gradual addition of a defined (standardised) amount of calcium salts in different stages of treatment, in at least two partial dosages to the milk before curdling. Pasteurisation has been carried out at a temperature of 72 - 90 °C before the disaggregation process. The proposed method can be realised in two basic modifications. In the first modification, the temperature of pasteurisation is held at 85 °C and the temperature of the disaggregation of milk fat, casein micelle complexes, and of the partial disaggregation of soluble protein micelle complexes is held at 55 - 65 °C.

In the other modification, an energy - saving pasteurisation is carried out at a temperature of 72 - 74 °C and at the temperature of the disaggregation of milk fat and protein complexes is held at 70 - 74 °C, while the defined (standardised) amount of soluble calcium salts can be added to the milk before and after the standardisation of microbiological conditions of the milk at a ratio from 1/3 - 1/2 to 2/3 - 1/2 of the defined amount of calcium salts. The gradually addition of calcium salts can be realised in three same doses, with the first dose being added before pasteurisation and the remaining two being added before and after the standardisation of microbiological conditions of the milk before the curdling process.

The presented method according the invention utilises a physico- chemical treatment of disaggregation of the milk fat, where removal of dumps of fat globules from the milk at a considerably lower pressure than by classical homogenisation. The disaggregation disturbs not only fat clumps but also the complexes of casein micelles and partly complexes of micelles of soluble proteins. This creates favourable conditions for the coagulation of proteins at cheese and quarg processing.

Physico- chemical effects of disaggregation are synergicaly strengthened by simultaneous treatment of another physico- chemical changes which resulting from gradually addition of soluble calcium salts to milk before curdling.

A consequence of application of presented measures according to invention consist in minimalization of milk fat escape into whey, in lowering of the protein content in the whey with increasing of protein yield with about 5 % in comparison to well-known comparable classical methods of natural cheese and quarg production. Further advantages are that the method according to presented invention does not require special investment not special equipment. The disaggregation step can be carried out into the existing homogenisers.

### Examples for the realisation of the invention

The overall technological process of the milk pre-treatment for enzymatic method of cheese- and quarg making can be divided into the following operation units: pasteurisation of raw milk, disaggregation of the milk fat and protein micelle complexes, standardisation of microbiological milk conditions and adjustment of milk souring, pre-ripening in the cheesemaking machine, curdling and drying of the rennet curd. In the following examples, the procedure of milk pre-treatment according to the invention is illustrated on two following examples.

### Example 1

The one half of the total defined (standardised) amount of the saturated solution of calcium chloride is added in pasteurised milk with fat content in dry matter of 10% determined for the production of delicate quarg. The milk is then standardised up to a fat content of 0.35 %, pre-heated up to temperature of 65 °C and disaggregated at a pressure of 7 MPa in a homogeniser. Prior to curdling, the other half of the total defined (standardised) amount of the saturated calcium chloride solution is added and the milk is then processed under usual technological conditions.

### Example 2

The one third of the total defined (standardised) amount of the saturated solution of calcium chloride is added into raw milk, which is determined for the production of Edam-type cheese. The milk is then pasteurised by the energy-saving pasteurisation at a temperature 72 °C and then the milk fat and protein micelle complexes are disaggregated in homogeniser. The disaggregation takes place fully or partly:
a) when the standardised milk of a fat content of 2.55 % is pre-heated up to a temperature of 72 °C and disaggregated at a pressure of 5.5 MPa;
b) when the low-fat cream from the skimmer is drained into the homogeniser prior to the inlet of the homogeniser, the skimmed milk from the first regeneration section is sucked in. Then disaggregation takes place at temperature 72 °C and a pressure 7,5 MPa. The disaggregated portion is drained back into the first regeneration section of the pasteuriser, where it is added into the rest of the skimmed milk.

After pasteurisation and disaggregation of the milk, the second one third of the total defined (standardised) amount of the saturated calcium chloride solution is then added to milk. Such pre-treated milk is after the standardisation up to a required fat content of 2.7 % and after adjustment of the souring activity, let pre-ripen under usual technological conditions over to a next day. Then the rest-one third of the total defined (standardised) amount of the saturated calcium chloride solution is added into the milk in the cheesemaking machine and after adjustment of the acidity, the milk is curdled at temperature 30 - 35 °C and dried at temperature 38 - 45 °C for 50 - 70 minutes.

### Utilisation in industry

The method according to the invention can be applied besides the examples also for production of non-traditional mainly semi-hard cheeses of various dry substance and various content of fat in the dry-substance and also for production of quarg.

## Claims

1. The method of milk pre-treatment before curdling for the classical method of cheese and quarg production which comprise a combination of steps:
a) pasteurisation of milk at a temperature of 72 to 90 °C, and after the pasteurisation
b) disaggregation of a milk fat, casein micelle complexes and the partial disaggregation of soluble whey protein micelle complexes carried out in a homogeniser under a pressure of 4 to 8 MPa and at a temperature of 55 ° to 74 °C, and
c) gradual addition of a defined amount of calcium salts in mutually differing stages of milk pre-treatment of the milk processing, in at least two partial doses.

2. The method according to the claim 1, where gradual addition of the defined amount of calcium salts is realised in three same doses, namely before pasteurisation and before and after the standardisation of microbiological conditions of the milk before the curdling process.

## Patentansprüche

1. Verfahren zur Milchvorbehandlung vor dem Gerinnen beim klassischen Verfahren zur Käse- und Quarkherstellung mit den Schritten:
a) Pasteurisierung der Milch bei einer Temperatur von 72 bis 90°C und nach der Pasteurisierung
b) Trennung von Milchfett, Kaseinmizellenkomplexen und teilweise Trennung von löslichen Molkeproteinmizellenkomplexen, weiche in einem Homogenisierapparat bei einem Druck von 4 bis 8 MPa und bei einer Temperatur von 55 bis 74°C ausgeführt wird, und
c) Graduelle Zugabe einer bestimmten Menge von Kalziumsalzen in den verschiedenen Stufen der Milchvorbehandlung bei der Milchverarbeitung in wenigstens zwei Teildosen.

2. Verfahren nach Anspruch 1,
wobei die graduelle Zugabe der bestimmten Menge von Kalziumsalzen in drei gleichen Dosen ausgeführt wird, nämlich vor der Pasteurisierung sowie vor und nach der Standardisierung der mikrobiologischen Bedingungen der Milch vor dem Gerinnungsprozeß.

## Revendications

1. Procédé de prétraitement du lait avant le caillage en vue du procédé classique de fabrication de fromage et de caillé comprenant une combinaison des étapes suivantes :
a) la pasteurisation du lait à une température de 72 à 90 °C, et après la pasteurisation
b) la désagrégation de complexes de micelles de caséine de matières grasses de lait, et la désagrégation partielle de complexes de micelles de protéines de petit lait soluble, exécutées dans un homogénéisateur sous une pression de 4 à 8 M Pa et à une température de 55° à 74 °C, et
c) un ajout progressif d'une quantité définie de sels de calcium dans des stades qui diffèrent mutuellement de pré-traitement de lait du traitement de lait, en au moins deux doses partielles.

2. Procédé selon la revendication 1, où l'ajout progressif de la quantité définie de sels de calcium est réalisé en trois mêmes doses, à savoir avant la pasteurisation et avant et après la normalisation des conditions microbiologiques du lait avant le procédé de caillage.
